# EUROPEAN PATENT APPLICATION

(11) **EP 4 647 344 A1**
(43) Date of publication of application: **12.11.2025**
(21) Application number: 24315226.1
(22) Date of filing: 06.05.2024
(51) Int. Cl.: B64D 37/30, B64G 1/40, F16L 9/18

(54) **A PIPE ARRANGEMENT FOR A VEHICLE, SUCH AS AN AIRCRAFT, PROPULSION SYSTEM AND VEHICLE EQUIPPED THEREWITH**

(71) Applicant: AIRBUS Operations GmbH, 21129 Hamburg (DE); Airbus Operations SAS, 31060 Toulouse (FR)
(72) Inventor: ELBRACHT, Dirk, 21129 Hamburg (DE); ALVAREZ, Franck, 31060 Toulouse (FR); BORN, Johannes, 21129 Hamburg (DE); SCHAROWSKY, Thorsten, 21129 Hamburg (DE); LEIGH, Timothy, 31060 Toulouse (FR)
(74) Representative: KASTEL Patentanwälte PartG mbB

(57) **Abstract**

In order to allow functional integration in a single structure for fluid transport in vehicles, the invention proposes a pipe arrangement (30) that comprises at least one multi-walled pipe section (36) that includes a multi-walled pipe (38) for separately transporting each fluid medium or for separately accommodating each solid medium. In one solution, the multi-walled pipe section (36) includes at least two nested pipe layers (40) and the multi-walled pipe section (36) is formed in a location of the pipe arrangement (30) that is disposed in a confined space (72) of the vehicle. In another solution, the multi-walled pipe section (36) includes at least three nested pipe layers (40), wherein each pipe layer (40) is chosen to transport a fluid medium or to accommodate a solid medium.

## Description

The invention relates to a pipe arrangement for a vehicle, such as an aircraft. The invention further relates to a propulsion system for the vehicle and a vehicle equipped therewith.

Emission reduction is a mainstay for future mobility, especially in air travel. Future concepts not only try to mitigate greenhouse gas emission, but also emission of particulate matter. A promising approach is the use of a fuel cell system (FCS) to chemosensory power the aircraft. The FCS converts hydrogen and oxygen/air into electric energy for the aircraft. In addition, cooling agents can be supplied to the FCS.

EP 4 119 834 A1 discloses a double-walled hydrogen tank assembly for an aircraft with an improved service life.

EP 4 184 140 A1 discloses a system for hydrogen leak detection between a hydrogen tank and a hydrogen consumer, e.g., a fuel cell system.

EP 4 191 119 A1 discloses a tank assembly for cryogenic hydrogen in an aircraft.

EP 4 296 158 A1 discloses a fairing for an external hydrogen fuel tank. EP 4 349 716 A1 discloses a hydrogen tank that is accommodated below the floor in a fuselage.

It is the object of the invention to improve pipe arrangements for vehicles, in particular to allow a more efficient handling of various fluid media in confined spaces of the vehicle fuselage.

The object is achieved by the subject-matter of the independent claims. Preferred embodiments are subject-matter of the dependent claims.

The invention provides a pipe arrangement for a vehicle, preferably for an aircraft, the pipe arrangement being configured to transport at least one fluid medium and/or to accommodate at least one solid medium, the pipe arrangement comprising at least one multi-walled pipe section that includes a multi-walled pipe for separately transporting each fluid medium or for separately accommodating each solid medium.

One idea is that the multi-walled pipe section includes at least two nested pipe layers and is formed in a location of the pipe arrangement to be disposed in a confined space of the vehicle, where the confined space does not allow for individual pipes for each fluid medium and/or each solid medium.

An alternative or additional idea is that the multi-walled pipe section includes at least three nested pipe layers, wherein each pipe layer is chosen to transport a fluid medium or to accommodate a solid medium.

With ever increasing complexity in vehicles, specifically aircraft, there is a need for functional integration in order to meet conflicting design criteria. As space and weight are scarce resources in vehicles, the pipe arrangement combines the transport of different media and other functions in a single multi-walled pipe section. The functional integration is used in confined spaces that do not allow separate pipes for each medium. On the other hand, the functional integration is employed to make room for other features, by combining at least three pipes. Overall, the number of parts and the weight can be reduced. Furthermore, the overall footprint of the pipe arrangementcan be reduced to reach confined spaces that could not be reached otherwise or to provide additional space for other features.

Preferably, the pipe arrangement comprises at least one fluid source and/or at least one fluid sink that are fluidly connected to each other via the at least one multi-walled pipe section. Preferably, the at least one fluid source includes a fuel tank or cryogenic fuel tank. Preferably, the at least one fluid source includes an oxidizer tank or a cryogenic oxidizer tank. The pipe arrangement can be generally used for fluids of all kinds. In some embodiments the pipe arrangement is used for fuel supply.

Preferably, a first pipe layer provides a first function and a second pipe layer provides a second function that is different from the first function. Preferably, the first and second functions are chosen from a group of functions consisting of a fluid transport function of a specific fluid medium that is contained in the respective pipe layer, an accommodation function of a specific solid medium that is contained in the respective pipe layer, a thermal insulating function, a heat exchanging function for exchanging heat between adjacent pipe layers, and a fluid capture function for capturing a fluid permeating through a pipe wall. Different function of the pipe arrangement can be integrated into different pipe layers of the multi-walled pipe. This approach allows a compactification of the footprint of the multi-walled pipe compared to the same amount of single-walled pipes.

Preferably, the pipe arrangement further comprises at least two single-walled pipe sections that are combined into or branched off from the multi-walled pipe section. Transitions between multi-walled and single-walled pipe sections are possible and allow for a more flexible approach. Indeed there may be some areas in the vehicle, where a single-walled pipe is preferred and the multi-walled pipe is merely employed in areas, where there is no alternative.

Preferably, the multi-walled pipe section has a number of pipe layers that is at least the number of combined single-walled pipe sections. Preferably, each single-walled pipe section is fluidly connected to at least one or exactly one pipe layer. In some embodiments, the function of one single-walled pipe can be distributed to more than one pipe layer of the multi-walled pipe. In some embodiments there may be a 1-to-1 correspondence between the number of single-walled pipes and the pipe layers of the multi-walled pipe. In some embodiments mixtures of the two approaches may be used.

Preferably, the pipe layers are configured such that the flow rate of each fluid medium is substantially the same as before entering the multi-walled pipe section. In some embodiments, where flow rate is critical, e.g., hydraulics, the pipe layers can have the necessary thickness and radius such that the flow rate given by the single-walled pipe does not change. In some embodiments, the flow of a single-walled pipe may be distributed into more than one pipe layer to allow for the same flow rate.

Preferably, the at least one fluid sink includes a fuel cell system, FCS, configured for generating electrical energy. Preferably, the FCS is fluidly connected to the at least one fluid source via the at least one multi-walled pipe section. In some embodiments, the pipe arrangement is used for fuel supply.

Preferably, the multi-walled pipe section comprises an innermost pipe layer that contains and transports fuel from the fuel tank to the fluid sink. Preferably, the multi-walled pipe section comprises a first outer pipe layer that surrounds the innermost pipe layer that contains and is suitable to transport coolant. Preferably, the multi-walled pipe section comprises a second outer pipe layer that surrounds the first outer pipe layer and contains and is suitable to transport coolant. With this configuration, a thermal management of the fuel can be implemented with the pipe arrangement.

Preferably, the first and second outer pipe layers are in thermal contact with each other to allow heat exchange. Preferably, the first and second outer pipe layers are fluidly connected to each such that a coolant flow within the first and second outer pipe layers is in opposite directions.

Preferably, the pipe arrangement comprises a gaseous fuel trap that is fluidly connected to the first outer pipe layer and/or the second outer pipe layer, wherein the coolant is suitable for capturing and releasing gaseous fuel, wherein optionally the gaseous fuel trap causes the coolant to release fuel within the gaseous fuel trap. In case of gaseous fuels like hydrogen, it is possible that the gaseous fuel escapes its fuel line and permeates through the pipe wall(s). The coolant may be able to capture the gaseous fuel and confine it within the coolant so the risk of leakage is reduced. At certain points in the pipe arrangement called traps, the coolant can be caused to release the gaseous fuel again. This may happen via catalytic reaction or the heating, for example. The gaseous fuel collects at the top of the trap from where it may be periodically released or ejected into the environment outside of the vehicle.

Preferably, the fuel tank comprises a heat exchanger that is fluidly connected to the first and second outer pipe layer. Preferably, the heat exchanger is configured to transfer heat from the coolant to the fuel to cause evaporation of the fuel. The heat of the FCS or other systems cooled by the coolant may be used to evaporate cryogenic fuel. With this approach a pumpless transport of the fuel is possible.

Preferably, the multi-walled pipe includes a structured surface for increasing heat exchange with the environment. Structured surfaces may increase the surface area of the respective multi-walled pipe. This may act as a cooling structure, e.g. in the form of fins or dimples or other changes to the surface.

Preferably, the multi-walled pipe includes at least one sensor that is optionally chosen from a group consisting of a fluid flow sensor, a temperature sensor, a pressure sensor, a chemosensor, e.g. a gas detector, or combinations of those sensors.

The invention provides a propulsion system for a vehicle, preferably an aircraft, the propulsion system comprising at least one electrical engine and a preferred pipe arrangement, wherein the FCS supplies the electrical engine with electrical power. The propulsion system may profit from the advantages of the pipe arrangement used on the fuel supply.

The invention provides a vehicle, preferably an aircraft, comprising at least one confined space and a preferred pipe arrangement or a preferred propulsion system, wherein each multi-walled pipe section is arranged within each confined space.

The hydrogen is typically stored in a cryogenic tank that is preferably located in the fuselage of the aircraft. In this concept, the FCS is preferably located in a so-called pod that is arranged under the wing, similar to today's conventional engines.

As a result, the different media (fuel, oxidizer, coolant, etc.) have to be delivered from their respective tanks to the FCS. The hydrogen can be transported in a liquid or gaseous state. A gaseous transport is typically preferred.

Several media are typically involved in the entire FCS, such as fuel, supportive media, e.g. coolant, and waste media, e.g. water, during the regular operation and are handled by the appropriate plumbing or pipe system. It may also be necessary to handle hazardous substances or fire in case of an emergency.

The handling of various media may lead to a high demand on piping knots during manufacturing, procurement, storage and installation efforts. It is one idea to use synergies by function integration to increase the efficiency of the pipe system for media distribution.

This concept can be used in all piping applications with different media where synergies can be used between the different media, such as cooling, preheating, shielding, cleaning, stabilization, collecting, and/or integrating.

In contrast to the mostly used double walled pipes that are installed for safety reasons, e.g. with the inner pipe typically conducting the hydrogen and the outer pipe having a material to avoid hydrogen burn, the focus of this disclosure is to provide an improved regular function of the system.

In an embodiment, the inert gas and peripheral equipment, which is an additional equipment with the cooling system of the fuel cell, can be replaced. It is also possible to add another medium which enables binding of H₂ within a liquid and release the hydrogen in a specific chemical reaction afterwards.

Ideally, the disclosed technical solution is able to enhance safety, to compactify the system, and/or increase the efficient transport of various media through a highly integrated pipe system.

In some embodiments an innovative pipe arrangement that includes multiple nested pipes, i.e. pipe-in-pipe arrangements is provided. The multi-walled pipes may accommodate two, three, or more pipes. Each pipe can be tasked with transporting a distinct medium, which may range from gases and liquids to powders.

Some pipes may serve an insulative function, employing insulating vacuum or insulating materials such as gas, liquid, or powder. Preferably, the insulating medium remains static. This arrangement allows for precise temperature control of the transported media.

A possible configuration of this system may include an inner pipe or conduit for fuel, such as hydrogen (H₂), surrounded by additional pipes designated for various functions. For example, another conduit may carry an H₂ binding medium, a third and fourth conduit may manage coolant flow in and out, a fifth conduit may provide thermal insulation, and a sixth conduit is dedicated to conducting wastewater. This setup can be expanded with additional layers for further functionalities.

The design enables the system to self-regulate its temperature, allowing efficient heat exchange between two mediums, for example, using the heat from a coolant outlet to preheat the incoming coolant. In an embodiment the pipe conduits are connected to form a counterflow heat exchanger.

The pipe system can be positioned between a tank and an FCS or an engine to improve performance. It is also noted that this arrangement is not only compatible but preferably manufactured with additive manufacturing techniques, e.g. in polymer or metal.

This solution allows advantages, including the potential for collecting and transporting hydrogen leakage through the use of a specialized collecting medium, like N-ethylcarbazole. The collecting medium may capture leaked hydrogen and transport it to a catalyst for recovery.

The system may also be configured to facilitate hydrogen leakage measurement, to control the temperature of the system and its transported media, to preheat a fuel feed line, or to allow for the preheating of gas or liquid inlets.

Additionally, the system can control the expansion of hydrogen with increasing heat or act as a self-pumping device through gas expansion and specific piping shapes. In another embodiment the system may integrate fire protection.

A manifold designed for a fuel cell application may comprise a complex arrangement of multiple fluid pipes, including hydrogen, air, and coolant lines that are able to supply the fuel cell. This manifold may perform several functions: it conducts fuel, ensures leak tightness against gases, transports coolant, maintains leak tightness for liquids, and prevents the mixing of different media to avoid reactions. Additionally, the manifold may be designed to integrate sensors.

It is one idea to consolidate these multiple functions into more compact and safer multi-walled pipe component that are integrated in the pipe arrangement. Utilizing synergistic effects from the build manner and the properties of different media, the multi-walled pipe may preferably be produced through additive manufacturing. Some configurations may well be only manufacturable by additive manufacturing.

The piping system preferably includes multiple concentric pipes, where the walls and the gaps between them can perform several critical tasks. These gaps can conduct media, collect leaks from a more inward pipe, or possess fire extinguishing properties, if the inner pipe catches fire.

Additionally, a fluid medium may have hydrogen binding properties to collect and release hydrogen at a catalytic site centralized in the piping system. These gaps are not only for collecting hazardous substances but may also allow for the measurement and monitoring of substance concentrations, contributing to system health monitoring.

In some embodiments heat can be dissipated from the engines, and coolant can be supplied thereto. Moreover, the heating of a cold medium within these pipes can cause volume expansion, which, combined with an optimized pipe shape, can facilitate passive pumping due to the resultant pressure increasing flow in the intended direction.

By filling these gaps with functional media, the mechanical stability of the piping system can be enhanced compared to a system with unpressurized or vacuumized gaps.

Furthermore, the water produced by the fuel cell can be collected and directed for use within the aircraft, such as supplying restrooms or tanks. The pipe walls contain the medium within them, guide the outer medium, and can provide mechanical stability to the outer pipe. The shape and wall thickness of an inner tube can be adjusted to control the flow rate and speed in the outer pipe, additionally supporting heat transfer between media or insulating one medium from another in an adjacent pipe.

Overall, the ideas presented herein offer a highly integrated pipework solution that leverages the synergies between conducted media and integrated neighboring systems to achieve a compact, lightweight configuration.

Embodiments of the invention are described in more detail with reference to the accompanying schematic drawings that are listed below.
Fig. 1 depicts an embodiment of an aircraft;
Fig. 2 depicts a cross-section of a multi-walled pipe;
Fig. 3 depicts a cross-section of a support member;
Fig. 4 depicts a first embodiment of a junction section;
Fig. 5 depicts a second embodiment of a junction section;
Fig. 6 depicts a cross-section of a fuselage;
Fig. 7 illustrates operation of a first embodiment of a pipe arrangement;
Fig. 8 illustrates operation of a second embodiment of a pipe arrangement; and
Fig. 9 illustrates operation of a third embodiment of a pipe arrangement.

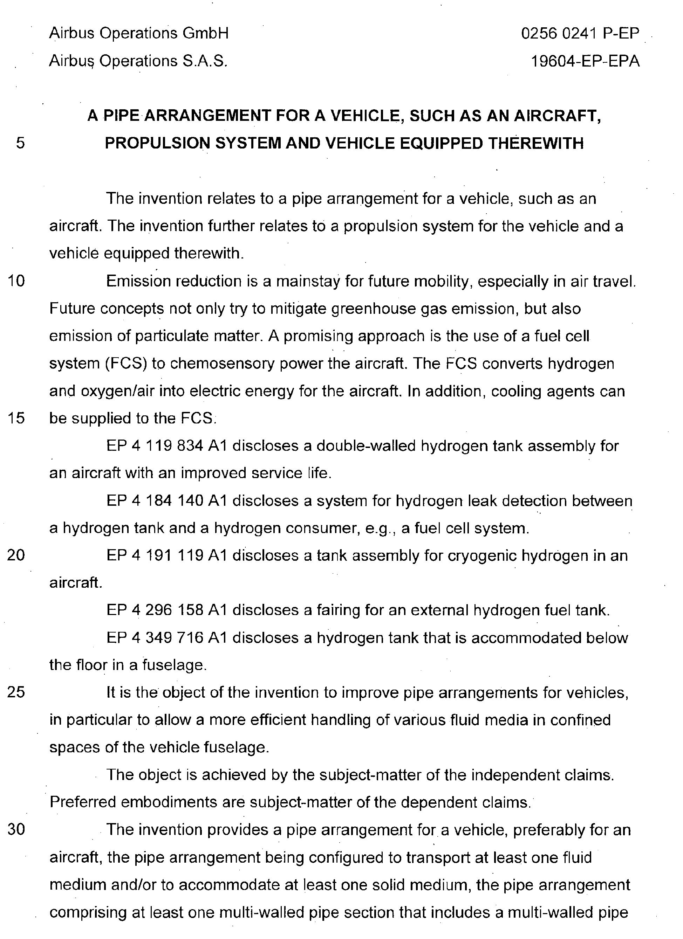

Fig. 1 depicts an aircraft 10, e.g. a passenger aircraft. The aircraft 10 comprises a fuselage 12 and a pair of wings 14 extending from the fuselage 12. The aircraft 10 further includes a propulsion system 16. The aircraft 10 includes a plurality of pods 18. Each pod 18 is arranged on the wings 14. Each pod 18 provides an aerodynamic cover for parts, modules or systems housed therein.

The propulsion system 16 includes a plurality of fuel cell systems (FCS) 20. The FCS 20 is configured to generate electric power from a fuel and an oxidizer, e.g. hydrogen and oxygen. FCS 20 is an example for a fluid sink. Each FCS 20 is housed in one pod 18.

Furthermore, the propulsion system 16 includes a plurality of electric engines 22 that are disposed on the pods 18. Each electric engine 22 drives a propeller 24 that generates the propulsive force for the aircraft 10.

The aircraft 10 includes at least one fluid tank 26, preferably configured as a fuel tank 28. The fluid tank 26 is an example for a fluid source. The fluid tank 26 is preferably arranged in or on the fuselage 12. The fluid tank 26 may also be integrated into the fuselage 12.

Each fluid tank 26 can store a fluid. The fluid tank 26 can store fuel preferably in the form of hydrogen. The hydrogen is preferably stored as a liquid at cryogenic temperatures. The fluid tank 26 may be configured as a cryogenic fluid tank.

While not explicitly depicted, it is also possible that there is a fluid tank 26 that is configured as an oxidizer tank that stores oxidizer, e.g. oxygen. Preferably, the oxygen is stored as a liquid at cryogenic temperatures as well.

The aircraft 10 comprises a pipe arrangement 30. The pipe arrangement 30 is configured to transport fluid media and optionally to accommodate solid media. The pipe arrangement 30 fluidly connects the fluid tanks 26 to the FCS 20. Preferably, the pipe arrangement 30 provides at least one redundant fluid path for connecting the fluid tanks 26 to each FCS 20.

The pipe arrangement 30 includes different types of pipe sections 32. The type of pipe section 32 is generally chosen from a single-walled pipe section 34 and a multi-walled pipe section 36.

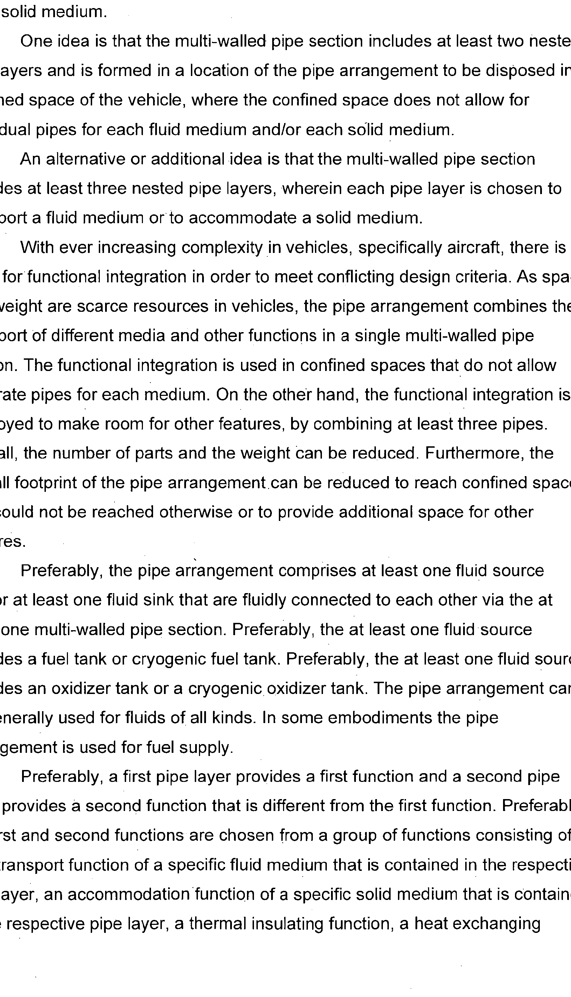

Referring to Fig. 2, a multi-walled pipe 38 for the multi-walled pipe section 36 is described in more detail.

The multi-walled pipe 38 is formed by a plurality of nested pipe layers 40. Each pipe layer 40 comprises or consists of a pipe wall 42 and a pipe cavity 44. The pipe walls 42 separate adjacent pipe cavities 44 from each other. The fluid transport or solid accommodation takes place in the respective pipe cavity 44.

An innermost pipe layer 46 is typically concentrically surrounded by the other pipe layers 40. An outermost pipe layer 48 is arranged to surround or enclose all more inwardly arranged pipe layers 40 and in particular the innermost pipe layer 46.

The multi-walled pipe 38 includes support members 50. The support members 48 extend from the innermost pipe layer 46 towards the outermost pipe layer 48. The support members 50 are arranged to support each pipe wall 42 in a radial direction.

The multi-walled pipe 38 may further include a structured surface 52. The structured surface 52 is configured for increasing heat exchange and may take the form of fins, dimples or the like. The structured surface 52 is preferably formed on the pipe wall 42 of the outermost pipe layer 48.

The multi-walled pipe 38 may include one or more sensors 54. The sensor 54 may be any of a fluid flow sensor, a temperature sensor, a pressure sensor, a chemosensor, e.g. a gas detector, or combinations of those sensors that can be integrated into a single sensor device.

Referring to Fig. 3, a cross-section of the support member 50 is depicted. The support member 50 is streamlined to reduce its impact on the fluid flow along the flow direction 56. The support member 50 may have different streamlined shapes and need not be exactly shaped as depicted.

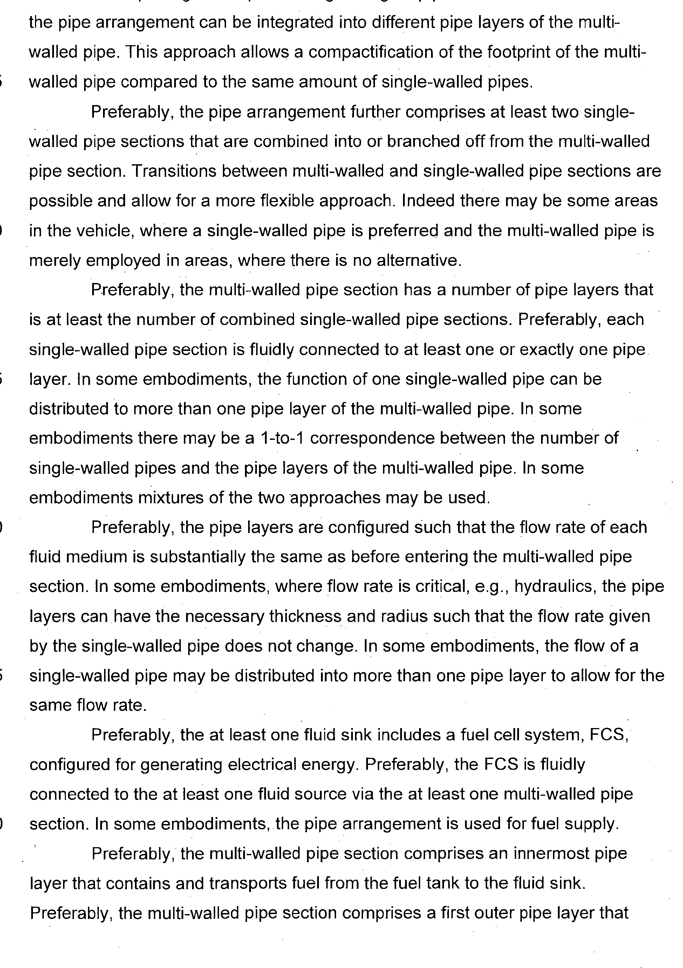

Referring to Fig. 4, a first embodiment of a junction section 58 is illustrated. The junction section 58 is also sometimes referred to as a manifold. The junction section 58 is described based on two single-walled pipe sections 34 and one multi-walled pipe section 36 with other pipe layers 44 omitted for sake of clarity. It should be noted that the described ideas are also applicable to the other pipe layers 44.

The junction section 58 is configured to combine two single-walled pipe sections 34 into a combined multi-walled pipe section 36. The junction section 58 is also able to separate the multi-walled pipe section 36 into single-walled pipe sections 34.

The junction section 58 comprises an inner pipe 60 and an outer pipe 62. The inner pipe 60 has an inner supply section 64. The outer pipe 62 has an outer supply section 66. The outer pipe 62 further includes a fluid passage 68 that is formed in an end portion of the outer pipe 62.

The inner supply section 64 is fluidly connected to the fluid passage 68. The inner pipe 60 further includes an inner conduit section 70 that is also fluidly connected to the fluid passage 68. The inner conduit section 70 is completely housed by the outer pipe 62 and forms an inner pipe wall 42 for the outer pipe 62. Thus, a multi-walled pipe 38 is formed. The fluids transported by the inner pipe 60 and the outer pipe 62, respectively, are kept separated by the pipe wall 42 between the inner pipe 60 and the outer pipe 62. Thus, the single-walled pipe sections 36 can be combined into or branched off from each other in the multi-walled pipe section 34.

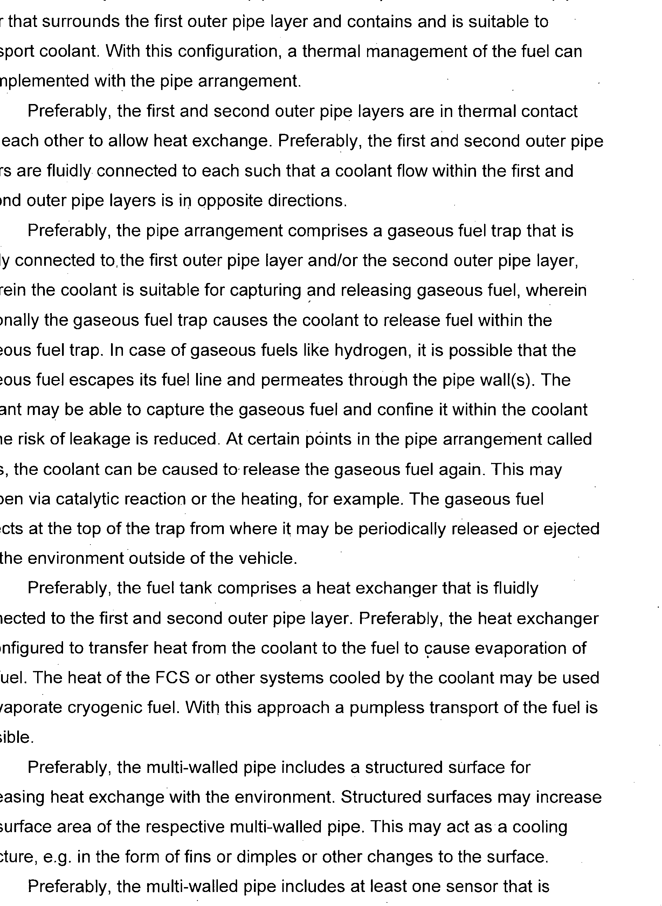

Referring to Fig. 5, a second embodiment of a junction section 58 is illustrated. The junction section 58 is described insofar as it differs from the first embodiment. Any variations that can be applied may also be generally applied to the second embodiment. In contrast to the first embodiment, the fluid passage 68 is formed in the pipe wall 42 of the outer pipe 62.

It should be noted that the junction section 58 may be applied simultaneously to different pipe layers 40. In other words, the junction section 58 may also serve to combine or separate a multiple multi-walled pipe section 36 into or from other multi-walled pipe sections 36, and the number of pipe layers 44 may change.

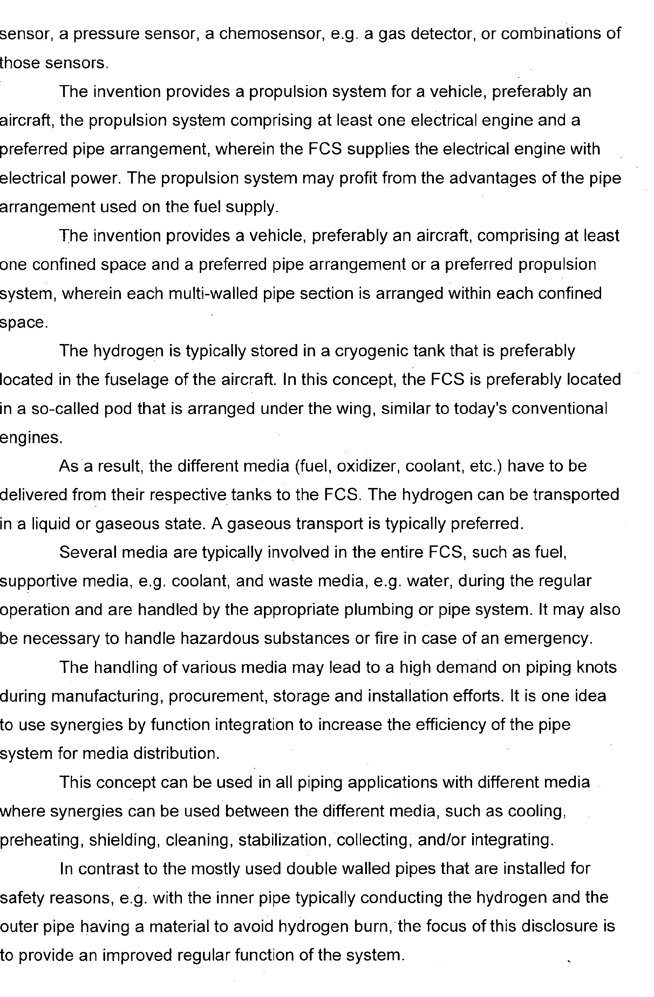

Referring to Fig. 1 and Fig. 6, the pipe arrangement 30 is described in more detail. The aircraft 10 has at least one confined space 72.

In general, the confined space 72 is any space of the aircraft 10, that does not allow for the accommodation of two or more separate single-walled pipe sections 34 that need to pass through the confined space 72. In this case, the single-walled pipe sections 34 leading up to the confined space 72, if any, are combined into the multi-walled pipe section 36, e.g. using the junctions sections 58 as needed. In a variant, a pipe section 32 that does not pass through the confined space 72 may be formed as a multi-walled pipe section 36 from at least three or more single-walled pipe sections 34.

Typical examples for the confined space 72 include, but are not limited to the space between interior panels 74 and the skin 76 of the fuselage 12, the space just below the floor panels 78, or between the floor panels 78 and cover panels 80, the space within the center wing box (not depicted) of the fuselage 12, and the space within the wing 14, specifically within the wing box of the wing 14.

The pipe arrangement 30 fluidly connects the fluid tanks 26 with the FCS 20. At some locations, the pipe sections 32 have to pass through at least one of the confined spaces 72. At this location, the pipe arrangement 30 has a corresponding multi-walled pipe section 36 with multi-walled pipe. The multi-walled pipe section 36 can fit into the confined space 72, where single-walled pipe sections 34 for each medium would not fit.

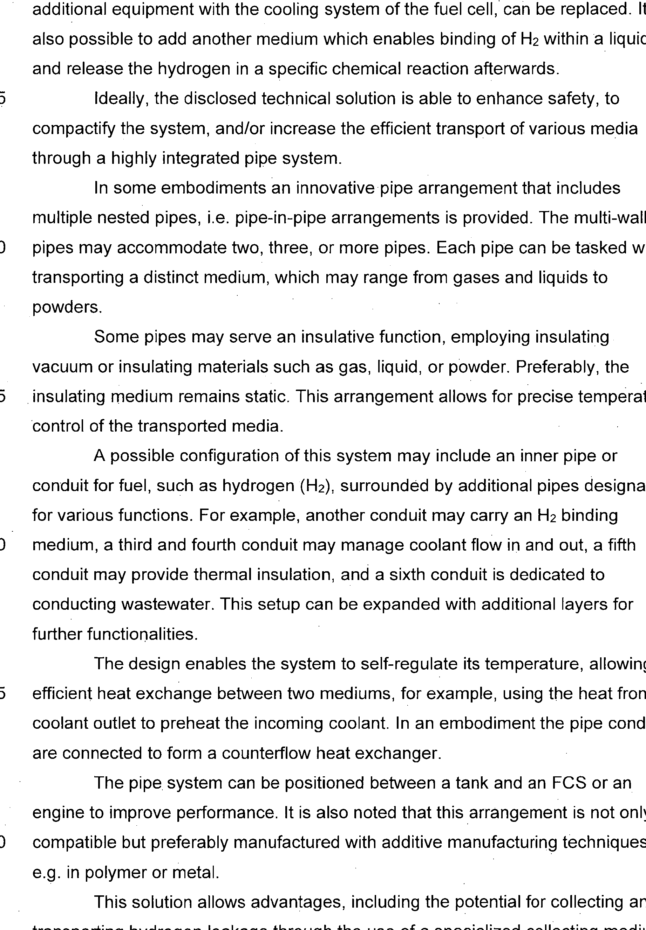

Referring to Fig. 7, operation of a first embodiment of the pipe arrangement 30 is described in more detail. The fuel tank 28 is configured as a cryogenic fuel tank and contains liquid hydrogen fuel at cryogenic temperatures. The FCS 20 is fluidly connected to the fuel tank 28 via the pipe arrangement 30. Furthermore, the FCS 20 is fluidly connected to a cooling system 82.

The FCS 20 has a fuel cell 84 that generates electrical power from hydrogen and oxygen. The FCS 20 further includes a cooling system 86 to cool the fuel cell 82.

The fluid connection has the multi-walled pipe section 36, where the different pipe layers 44 are operated as follows. The innermost pipe layer 46 transports gaseous hydrogen, that evaporated from the fuel tank 28, to the FCS 20. A first of the pipe layers 44 is adjacent to the innermost pipe layer 46 and in thermal contact therewith. A second of the pipe layers 44 is adjacent and in thermal contact with the first of the pipe layers 44. Furthermore, the first and second of the pipe layers 44 fluidly connect the cooling systems 82, 86. The arrows in the figure indicate the respective flow direction of the fluid medium. The diagonal lines indicate the temperature gradient within the respective pipe layer 40.

As indicated in Fig. 7, the hydrogen flows from the fuel tank 28 to the FCS 20, specifically the fuel cell 84, while the temperature of the hydrogen increases. The first of the pipe layers 44 operates as a counterflow cooler, where warm coolant flows from the FCS 20, specifically from the cooling system 86, to the cooling system 82. As the coolant approaches the cooling system 86 while being in thermal contact with the hydrogen, the coolant temperature decreases.

The cooling system 82 cools the coolant down and feeds it into the second of the pipe layers 44, where the coolant flows back to the coolant system 86 while in thermal contact with the counterflow in the first of the pipe layers 44.

The multi-walled pipe section 36 may further include a third of the pipe layers 44 that includes a flame retardant or fire protection material. The multi-walled pipe section 36 may further include a fourth of the pipe layers 44 that is evacuated for improved thermal insulation.

Referring to Fig. 8, operation of a second embodiment of the pipe arrangement 30 is described insofar as it differs from the first embodiment. The coolant system 82 is configured as a heat exchanger 88 that is in thermal contact with the fuel tank 28. The heat exchanger 88 transfers heat to the fuel tank 28 thereby evaporating hydrogen from the reservoir. With this configuration a pumpless transport of hydrogen can be achieved.

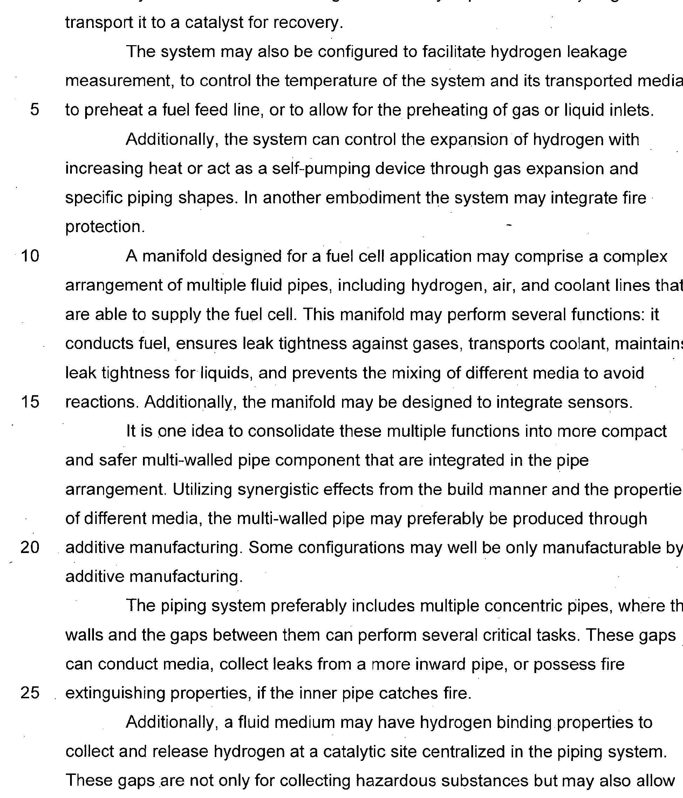

Referring to Fig. 9, operation of a third embodiment of the pipe arrangement is described insofar as it differs from the first and second embodiments. The coolant used in this embodiment is able to bind hydrogen and release it again, e.g. N-ethylcarbazole or 9-ethylcarbazole.

The cooling system 82 further includes a gaseous fuel trap 90. The gaseous fuel trap 90 may also be located somewhere else in the pipe arrangement 30 (see Fig. 1, for example). As the innermost pipe layer 46 is in contact with a coolant transporting pipe layer 44, the hydrogen may leak from the innermost pipe layer 46 through the pipe wall 42 into the coolant. When the coolant arrives at the gaseous fuel trap, the hydrogen can be released.

The gaseous fuel trap 90 is preferably dome-shaped such that the hydrogen released from the coolant will collect at the top of the gaseous fuel trap 90. The hydrogen is then regularly ejected or released from the gaseous fuel trap 90 in a controlled manner, preferably to the environment outside the aircraft 10.

### List of reference signs:

- 10: aircraft
- 12: fuselage
- 14: wing
- 16: propulsion system
- 18: pod
- 20: fuel cell system (FCS)
- 22: electric engine
- 24: propeller
- 26: fluid tank
- 28: fuel tank
- 30: pipe arrangement
- 32: pipe section
- 34: single-walled pipe section
- 36: multi-walled pipe section
- 38: multi-walled pipe
- 40: pipe layer
- 42: pipe wall
- 44: pipe cavity
- 46: innermost pipe layer
- 48: outermost pipe layer
- 50: support member
- 52: structured surface
- 54: sensor
- 56: flow direction
- 58: junction section
- 60: inner pipe
- 62: outer pipe
- 64: inner supply section
- 66: outer supply section
- 68: fluid passage
- 70: inner conduit section
- 72: confined space
- 74: interior panel
- 76: skin
- 78: floor panel
- 80: cover panel
- 82: cooling system
- 84: fuel cell
- 86: cooling system
- 88: heat exchanger
- 90: gaseous fuel trap

## Claims

1. A pipe arrangement (30) for a vehicle, preferably for an aircraft (10), the pipe arrangement (30) being configured to transport at least one fluid medium and/or to accommodate at least one solid medium, the pipe arrangement (30) comprising at least one multi-walled pipe section (36) that includes a multi-walled pipe (38),
wherein the multi-walled pipe section (36) includes at least two nested pipe layers (40) and is formed in a location of the pipe arrangement (30) to be disposed in a confined space (72) of the vehicle, where the confined space (72) does not allow for individual pipes for each fluid medium and/or each solid medium, and/or wherein the multi-walled pipe section (36) includes at least three nested pipe layers (40).

2. The pipe arrangement (30) of claim 1, further comprising at least one fluid source (26) and/or at least one fluid sink (20) that are fluidly connected to each other via the at least one multi-walled pipe section (36).

3. The pipe arrangement (30) of claim 2, wherein the at least one fluid source (26) includes a fuel tank (28) or cryogenic fuel tank (28); and/or wherein the at least one fluid source (26) includes an oxidizer tank or a cryogenic oxidizer tank.

4. The pipe arrangement (30) of any of the preceding claims, wherein a first pipe layer (40) provides a first function and a second pipe layer (40) provides a second function that is different from the first function, wherein the first and second functions are chosen from a group of functions consisting of a fluid transport function of a specific fluid medium that is contained in the respective pipe layer (40), an accommodation function of a specific solid medium that is contained in the respective pipe layer (40), a thermal insulating function, a heat exchanging function for exchanging heat between adjacent pipe layers (40), and a fluid capture function for capturing a fluid permeating through a pipe wall (42).

5. The pipe.arrangement (30) of any of the preceding claims, further comprising at least two single-walled pipe sections (34) that are combined into or branched off from the multi-walled pipe section (36), wherein the multi-walled pipe section (36) has a number of pipe layers (40) that is at least the number of combined single-walled pipe sections (34), wherein each single-walled pipe section (34) is fluidly connected to at least one or exactly one pipe layer (40).

6. The pipe arrangement (30) of any of the preceding claims, wherein the pipe layers (40) are configured such that the flow rate of each fluid medium is substantially the same as before entering the multi-walled pipe section (36).

7. The pipe arrangement (30) of any of the claims 2 to 6, wherein the at least one fluid sink (20) includes a fuel cell system (20), FCS, configured for generating electrical energy, wherein the FCS (20) is fluidly connected to the at least one fluid source (26) via the at least one multi-walled pipe section (36).

8. The pipe arrangement (30) of any of the claims 3 to 7, wherein the multi-walled pipe section (32) comprises an innermost pipe layer (46) that contains and transports fuel from the fuel tank (28) to the fluid sink (20), a first outer pipe layer (40) that surrounds the innermost pipe layer (46) that contains and is suitable to transport coolant, and a second outer pipe layer (40) that surrounds the first outer pipe layer (40) and contains and is suitable to transport coolant.

9. The pipe arrangement (30) of claim 8, wherein the first and second outer pipe layers (40) are in thermal contact with each other to allow heat exchange, and/or wherein the first and second outer pipe layers (40) are fluidly connected to each such that a coolant flow within the first and second outer pipe layers (40) is in opposite directions.

10. The pipe arrangement (30) of any of the claims 8 or 9, further comprising a gaseous fuel trap (90) that is fluidly connected to the first outer pipe layer (40) and/or the second outer pipe layer (40), wherein the coolant is suitable for capturing.and releasing gaseous fuel, wherein the gaseous fuel trap (90) causes the coolant to release gaseous fuel within the gaseous fuel trap (90).

11. The pipe arrangement (30) of any of the claims 8 to 10, wherein the fuel tank (28) comprises a heat exchanger (88) that is fluidly connected to the first and second outer pipe layer (40), wherein the heat exchanger (88) is configured to transfer heat from the coolant to the fuel to cause evaporation of the fuel.

12. The pipe arrangement (30) of any of the preceding claims, wherein the multi-walled pipe (38) includes a structured surface (52) for increasing heat exchange with the environment.

13. The pipe arrangement (30) of any of the preceding claims, wherein the multi-walled pipe (38) includes at least one sensor (54) that is optionally chosen from a group consisting of a fluid flow sensor, a temperature sensor, a pressure sensor, a chemosensor, e.g. a gas detector, or combinations of those sensors.

14. A propulsion system (16) for a vehicle, preferably an aircraft (10), the propulsion system (16) comprising at least one electrical engine and a pipe arrangement (30) of any of the claims 7 to 13, wherein the FCS (20) supplies the electrical engine with electrical power.

15. A vehicle, preferably an aircraft (10), comprising at least one confined space (72) and a pipe arrangement (30) of any of the claims 1 to 13 or a propulsion system (16) of claim 14, wherein each multi-walled pipe section (36) is arranged within each confined space (72).
